# EUROPEAN PATENT SPECIFICATION

(11) **EP 2 072 568 B1**
(45) Date of publication and mention of the grant of the patent: **07.12.2011**
(21) Application number: 07024836.4
(22) Date of filing: 20.12.2007
(51) Int. Cl.: C08K 5/00, C08K 5/3435, C08K 5/3475

(54) **UV stabilisation of a cross-linkable polyolefin composition comprising an acidic silanol condensation catalyst**
UV-Stabilisierung einer vernetzbaren Polyolefinzusammensetzung mit einem sauren Silanol-Kondensationskatalysator
Stabilisation par UV d'une composition de polyoléfine réticulable comprenant un catalyseur de condensation au silanol acide

(43) Date of publication of application: 24.06.2009
(73) Proprietor: Borealis Technology OY, 06101 Porvoo (FI)
(72) Inventor: Nylander, Perry, SE-412 61 Göteborg (SE)
(74) Representative: Kador & Partner

(56) References cited:
- EP-A- 1 201 827
- EP-A- 1 433 811
- EP-A- 1 760 111
- EP-A- 1 834 987
- WO-A-00/58975
- US-A1- 2003 050 401
- US-A1- 2003 096 904
- US-B1- 6 232 376

## Description

The present invention relates to a polyolefin composition comprising a cross-linkable polyolefin with hydrolysable silane groups, and an acidic silanol condensation catalyst which shows excellent curing and UV resistance, to an article, in particular a wire or a cable, comprising such a polyolefin composition, and to the use of such a composition for the production of an article, in particular a wire or cable.

It is known to cross-link polyolefins by means of additives as this improves the properties of the polyolefin such as mechanical strength and chemical heat resistance. Cross-linking may be performed by condensation of silanol groups contained in the polyolefin which can be obtained by hydrolysation of silane groups. A silane compound can be introduced as a cross-linkable group e.g. by grafting the silane compound onto a polyolefin, or by copolymerisation of olefin monomers and silane group containing monomers. Such techniques are known e.g. from US 4,413,066, US 4.297,310, US 4,351,876, US 4,397,981, US 4,446,283 and US 4,456,704.

For cross-linking of polyolefins, a silanol condensation catalyst must be used. Conventional catalysts are for example tin-organic compounds such as dibutyl tin dilaurate (DBTDL). It is further known that the cross-linking process advantageously is carried out in the presence of acidic silanol condensation catalysts. In contrast to the conventional tin-organic catalysts the acidic catalysts allow cross-linking to quickly take place already at room temperature and with no risk to release tin organic compounds to the environment. Such acidic silanol condensation catalysts are disclosed for example in WO 95/17463.

However, it is known that acidic silanol condensation catalysts react with UV stabilizers typically used in polymer applications in the prior art so that on the one hand protection from damages derived from ultraviolet rays and on the other hand the cure is killed. Therefore, polymer compositions which are cross-linked by acidic silanol condensation catalysts show minor UV resistance and cannot be used for applications where UV resistant formulations are required like installation cables, cable de fasade and outdoor pipes.

US 6,337,367 B1 discloses a silane cross-linked insulation material which comprises a substituted benzotriazole as UV stabilizer. However, the cross-linking catalyst is not disclosed.

Further, a benzotriazole derivative is used in CN 1500836 A as UV stabilizer in polyolefin compositions used for the production of polycarbonate plastic-wood boards.

Furthermore, JP 2003-3192846 A discloses a silane cross-linked polyolefin composition which comprises a benzotriazole derivative as UV stabilizer and a (meth)acrylate-based and/or an allylic cross-linking auxiliary for the use in electric wires.

However, it has been believed in the art that triazoles cannot be used in polymer compositions comprising an acidic silanol condensation catalyst as they would interact with the cross-linking components in an acidic environment.

It has been surprisingly found that the above objects of good cure combined with improved UV resistance in polymer compositions which are cross-linked by acidic silanol condensation catalysts can be achieved by addition of at least one acidic UV stabilizer to a polyolefin composition comprising a cross-linkable polyolefin with hydrolysable silane groups and an acidic silanol condensation catalyst.

The present application therefore provides a polyolefin composition comprising
(A) a cross-linkable polyolefin with hydrolysable silane groups;
(B) an acidic silanol condensation catalyst, and
(C) at least one UV stabilizer that is acidic, i.e. pH equal or less than 6.2, measured at 20-25 °C and with 1 wt% suspension.

It is preferred that all aspects of the present invention comprise a component (C) comprising at least one UV stabilizer according to formula (I) 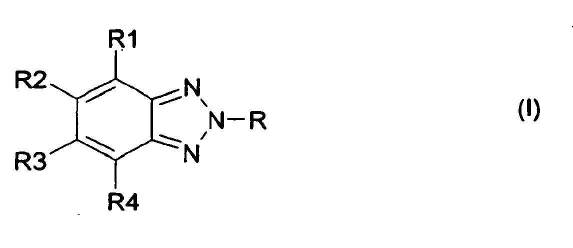 with R being a substituted or non-substituted hydrocarbon residue with at least 6 C-atoms;
and R1 to R4 being independently the same or different substituted or non-substituted hydrocarbon residues, hydrogen atoms or hetero atoms,
which is present in an amount of at least 0.30 wt%, preferably at least 0.35 wt%, most preferably 0.40 wt% of the polymer composition
and/or according to formula (II) 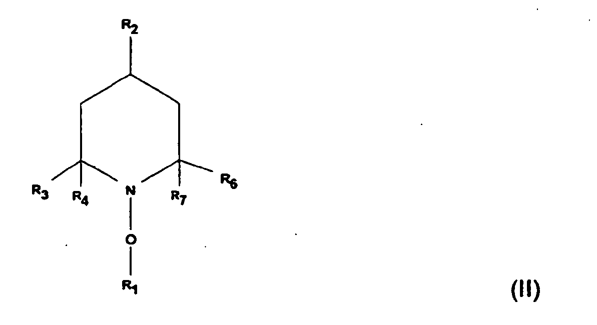 with R1 and R2 being any substituent,
and R3 to R6 being independently the same or different hydrocarbon,
which is present in an amount of at least 0.10 wt%, preferably 0.15 wt%, most preferably 0.18 wt% of the polymer composition, wherein the acidic silanol condensation catalyst (B) comprises an organic sulfonic acid comprising 10 to 200 C-atoms, the sulfonic acid further comprising at least one aromatic group.

It is further preferred that the UV stabilizer according to formula (I) and/or (II) is present in an amount of 5.0 wt% or less, more preferably 2.5 wt% or less, most preferably 1.0 wt% or less.

It further preferred that the UV stabilizer (C) has a pH of equal or less than 6.1, measured at 20-25 °C and with 1 wt% suspension.

It has been found that in the composition of the invention the at least one UV stabilizer does not spoil the reactivity with the acidic silanol condensation catalyst. Therefore products comprising the composition show improved protection from UV light combined with good cross-linking properties.

In a preferred embodiment of the at least one UV stabilizer (C) R in formula (I) further comprises at least one aryl group which may be substituted or non-substituted.

Furthermore, R in formula (I) preferably further comprises at least 8 C-atoms, more preferably at least 12 C-atoms, most preferably at least 14 C-atoms.

Still further, in formula (I), preferably R1, R2, R3, and R4 are independently hydrogen atoms or halogen atoms.

The at least one UV stabilizer (C) may comprise the structural unit according to formula (I) one or several times, e.g. two or three times. For example, two structural units according to formula (I) may be linked to each other via a bridging group.

The currently most preferred components of formula (I) are 2-(3,5-Di-*tert-*pentyl-2-hydroxyphenyl) benzotriazole (Cas 25973-55-1), 2-(2'-Hydroxy-5'-tert-octylphenyl) benzotriazole (Cas 3147-75-9), 2-(2'-Hydroxy-3',5'-di-t-butylphenyl)-5-chlorobenzotriazole (Cas 3864-99-1), 2-(2-Hydroxy-3,5-di-(α,α-dimethylbenzyl)phenyl) 2H-benzotriazole (Cas 70321-86-7), 2-(3',5'-di-tert-butyl-2'-hydroxyphenyl)-5-chlorobenzotriazole (Cas 3846-71-7), and 2,2'-methylene-bis(6-(2H-benzotriazole-2-yl)4-1,1,3,3-tetramethylbutyl)phenol (Cas 103597-45-1)

As regards formula (II) of the at least one UV stabilizer (C), R1 in formula (II) preferably represents hydrocarbon.

It is further preferred that in formula (II) R3 to R6 represent methyl.

The currently most preferred components of formula (II) is Bis(1-undecanoxy-2,2,6,6-tetramethylpiperidin-4-yl)-carbonate (Cas 705257-84-7).

The composition of all aspects of the present invention comprises a cross-linkable polyolefin containing hydrolysable silane groups (A).

More preferably the cross-linkable polyolefin comprises, still more preferably consists of, a polyethylene containing hydrolysable silane groups.

The hydrolysable silane groups may be introduced into the polyolefin by copolymerisation of e.g. ethylene monomers with silane group containing comonomers or by grafting, i.e. by chemical modification of the polymer by addition of silane groups mostly in a radical reaction. Both techniques are well known in the art.

Preferably, the silane group containing polyolefin has been obtained by copolymerisation. In the case of polyolefins, preferably polyethylene, the copolymerisation is preferably carried out with an unsaturated silane compound represented by the formula

R¹SiR²_{q}Y_{3-q} (III)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

Special examples of the unsaturated silane compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl- or arylamino group; and R², if present, is a methyl, ethyl, propyl, decyl or phenyl group.

A preferred unsaturated silane compound is represented by the formula

CH₂=CHSi(OA)₃ (IV)

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyl trimethoxysilane, gamma(meth)acryloxypropyl triethoxysilane, and vinyl triacetoxysilane, or combinations of two or more thereof.

The copolymerisation of the olefin, e.g. ethylene, and the unsaturated silane compound may be carried out under any suitable conditions resulting in the copolymerisation of the two monomers.

The silane group containing polyolefin (A) preferably contains 0.001 to 15 wt.% of the silane group containing monomers, more preferably 0.01 to 5 wt.%, and still more preferably 0.1 to 3 wt.%, and most preferably 0.4 to 2.4 wt.%.

It is furthermore preferred that the composition comprises a polyolefin with polar group containing monomer units.

Preferably, the polar groups are selected from siloxane, amide, anhydride, carboxylic, carbonyl, hydroxyl, ester and epoxy groups.

The polar groups may for example be introduced into the polymer by grafting of an ethylene polymer with a polar-group containing compound, i.e. by chemical modification of the polyolefin by addition of a polar group containing compound mostly in a radical reaction. Grafting is e.g. described in US 3,646,155 and US 4,117,195.

It is, however, preferred that said polar groups are introduced into the polymer by copolymerisation of olefinic, including ethylene, monomers with comonomers bearing polar groups.

As examples of comonomers having polar groups may be mentioned the following: (a) vinyl carboxylate esters, such as vinyl acetate and vinyl pivalate, (b) (meth)acrylates, such as methyl(meth)acrylate, ethyl(meth)acrylate, butyl(meth)acrylate and hydroxyethyl(meth)acrylate, (c) olefinically unsaturated carboxylic acids, such as (meth)acrylic acid, maleic acid and fumaric acid, (d) (meth)acrylic acid derivatives, such as (meth)acrylonitrile and (meth)acrylic amide, and (e) vinyl ethers, such as vinyl methyl ether and vinyl phenyl ether.

Amongst these comonomers, vinyl esters of monocarboxylic acids having 1 to 4 carbon atoms, such as vinyl acetate, and (meth)acrylates of alcohols having 1 to 4 carbon atoms, such as methyl (meth)acrylate, are preferred. Especially preferred comonomers are butyl acrylate, ethyl acrylate and methyl acrylate. Two or more such olefinically unsaturated compounds may be used in combination. The term "(meth)acrylic acid" is intended to embrace both acrylic acid and methacrylic acid.

Preferably, the polar group containing monomer units are selected from the group of acrylates and/or acetates.

The amount of polar group containing monomer units in the polyolefin preferably is 40 wt.% or less, more preferably 35 wt.% or less, and still more preferably is between 3 and 20 wt.%.

Furthermore, preferably the polar group containing monomer units are present in the polyolefin in an amount of from 2.5 to 15 mol%, more preferably 3 to 10 mol%, and most preferably 3.5 to 6 mol%.

In a particularly preferred embodiment, the cross-linkable polyolefin with hydrolysable silane groups (A) at the same time also contains the polar groups in any of the embodiments as described hereinbefore, i.e. the polyolefin is a terpolymer containing both the silane groups and the polar groups.

Furthermore, also the preferred amounts for the silane group and the polar group containing monomers as described above apply for the terpolymer.

Such terpolymers may be produced by grafting, or, preferably, by copolymerisation of olefin monomers and unsaturated monomers containing silane groups and polar groups.

If such a terpolymer containing both the silane groups and the polar groups is used in the composition of the invention, it is preferred that it makes up at least 80 wt.% of the total composition, more preferably at least 85 wt.%, and most preferably at least 90 wt.%.

For cross-linking of such polyolefins, a silanol condensation catalyst must be used. Conventional catalysts are for example tin-organic compounds such as dibutyl tin dilaurate (DBTDL). It is further known that the cross-linking process advantageously is carried out in the presence of acidic silanol condensation catalysts. In contrast to the conventional tin-organic catalysts the acidic catalysts allow cross-linking to quickly take place already at room temperature. Such acidic silanol condensation catalysts are disclosed for example in WO 95/17463.

Examples for acidic silanol condensation catalysts comprise Lewis acids, inorganic acids such as sulphuric acid and hydrochloric acid, and organic acids such as citric acid, stearic acid, acetric acid, sulphonic acid and alkanoric acids as dodecanoic acid.

Preferred examples for a acidic silanol condensation catalyst are sulphonic acid and tin organic compounds.

It is preferred that the acidic silanol condensation catalyst comprises a sulfonic acid, preferably comprises an organic sulfonic acid.

It is further preferred that the acidic silanol condensation catalyst comprises a sulphonic acid compound according to formula (V)

Ar(SO₃H)ₓ (V)

or a precursor thereof, Ar being an aryl group with one or several aromatic rings, preferably 1 to 3 aromatic rings, more preferably 1 to 2 aromatic rings which may be substituted or non-substituted, and x being at least 1.

The acidic silanol condensation catalyst may comprise the structural unit according to formula (V) one or several times, e.g. two or three times. For example, two structural units according to formula (V) may be linked to each other via a bridging group such as an alkylene group.

Preferably, the Ar group is an aryl group which is substituted with at least one C₁- to C₃₀-hydrocarbyl group, more preferably C₄ to C₃₀-alkyl group.

Furthermore, the compound used as organic aromatic sulphonic acid silanol condensation catalyst has from 10 to 200 C-atoms, more preferably from 14 to 100 C-atoms.

It is further preferred that the hydrocarbyl group is an alkyl substituent having 10 to 18 carbon atoms and still more preferred that the alkyl substituent contains 12 carbon atoms and is selected from dodecyl and tetrapropyl. Due to commercial availability it is most preferred that the aryl group is a benzene substituted group with an alkyl substituent containing 12 carbon atoms.

The currently most preferred compounds of formula (V) are dodecyl benzene sulphonic acid and tetrapropyl benzene sulphonic acid.

The acidic silanol condensation catalyst may also be precursor of a compound of formula (V), i.e. a compound that is converted by hydrolysis to a compound of formula (V). Such a precursor is for example the acid anhydride of the sulphonic acid compound of formula (V). Another example is a sulphonic acid of formula (V) that has been provided with a hydrolysable protective group as e.g. an acetyl group which can be removed by hydrolysis to give the sulphonic acid of formula (V). The acidic silanol condensation catalyst is preferably used in an amount from 0.0001 to 3 wt.-%.

The preferred amount of acidic silanol condensation catalyst is from 0.001 to 2 wt% and more preferably 0.005 to 1 weight% based on the amount of acidic silanol groups containing polyolefin in the polymer composition used for the outer and/or insulation layer.

The effective amount of catalyst depends on the molecular weight of the catalyst used. Thus, a smaller amount is required of a catalyst having a low molecular weight than a catalysts having a high molecular weight.

The polymer composition according to the invention may further contain various additives, such as miscible thermoplastics, antioxidants, further stabilizers e.g. water tree retardants, scorch retardants, lubricants, fillers, colouring agents and foaming agents.

The total amount of additives is generally 0.3 to 10.0 wt.%, preferably 1.0 to 7.0 wt.%, more preferably 1.0 to 5.0 wt.%.

As antioxidant, preferably a compound, or a mixture of such compounds, is used which is neutral or acidic, must comprise a sterically hindered phenol group or aliphatic sulphur groups. Such compounds are disclosed in EP 1 254 923 to be particularly suitable antioxidants for stabilisation of polyolefins containing hydrolysable silane groups which are crosslinked with a silanol condensation catalyst, in particular an acidic silanol condensation catalyst. Other preferred antioxidants are disclosed in W02005003199A1.

Preferably, the antioxidant is present in the composition in an amount of from 0.01 to 3.0 wt.%, more preferably 0.05 to 2.0 wt.%, and most preferably 0.08 to 1.5 wt.%.

As filler, preferably carbon black in an amount of 3.0 wt% or less, preferably 2.5 wt% or less, most preferably 2.0 wt% or less is used.

As colouring agent, all colouring agents apart from carbon black suitable for cable or pipe applications are used.

The at least one UV stabilizer (C) and optionally further additives may be compounded with the silane group containing polyolefin.

However, the at least one UV stabilizer (C) is usually added together with the acidic silanol condensation catalyst (B) to the silane group containing polyolefin by compounding the polymer with a so-called master batch, in which the catalyst, usually the at least one UV stabilizer (C), and optionally further additives are contained in a polymer, e.g. polyolefin, matrix in concentrated form.

Accordingly, the present invention also pertains to a master batch for a cross-linkable polyolefin composition comprising a matrix polymer and a acidic silanol condensation catalyst (B) in any of the above described embodiments.

The matrix polymer is preferably a polyolefin, more preferably a polyethylene, which may be a homo- or copolymer of ethylene, e.g. low density polyethylene, or polyethylene-methyl-, -ethyl, or -butyl-acrylate copolymer containing 1 to 50 wt.% of the acrylate, and mixtures thereof.

As stated, in the master batch the compounds to be added to the silane group containing polyolefin and the at least one UV stabilizer (C) are contained in concentrated form, i.e. in a much higher amount than in the final composition.

The master batch preferably comprises component (B) in an amount of from 0.3 to 15 wt.%, more preferably from 0.7 to 10 wt.%.

Furthermore, preferably the master batch also contains some or all of the other additives as described above, for example the stabilizers.

It is preferred that amount of the stabilizers contained in the master batch is up to 20 wt.%.

The master batch preferably is compounded with the silane group containing polymer and the at least one UV stabilizer (C) in an amount of from 1 to 10 wt.%, more preferably from 2 to 8 wt.%.

Compounding may be performed by any known compounding process, including extruding the final product with a screw extruder or a kneader.

The polyolefin compositions according to all aspects of the present invention preferably show excellent curing properties in the ice test represented by an amount Δ F of more than 40 Nm, more preferably more than 43 Nm, most preferably more than 45 Nm.

Further, the polyolefin compositions according to all aspects of the present invention preferably show excellent cross-linking properties in the ice test represented by a high cross-linking speed of more than 0.10 Nm/s, more preferably more than 0.11 Nm/s, most preferably more than 0.12 Nm/s.

At the same time, the polyolefin compositions according to all aspects of the present invention preferably show improved UV resistance as can be seen in a retention of more than 60 %, more preferably more than 70 %, most preferably more than 75 % of the elongation at break after 500 h in SEPAP UV exposure.

The present invention furthermore relates to a article, comprising the polyolefin composition in any of the above described embodiments.

In a preferred embodiment the article refers to a wire or cable or a pipe preferably used or stored outdoors.

It is preferred that the article refers to a coloured cable.

In a specific embodiment, the article refers to a natural coloured cable, which includes cables coloured by any of the pigments or pigment masterbatches intended to be used with polyolefins as a colouring agent.

In a preferred embodiment, the invention relates to a medium or high voltage cable comprising one or more conductors in a cable core, an inner semiconducting layer, followed by an insulating layer, and then an outer semiconducting layer, and an outer protective jacket wherein at least one of these layers, preferably the outer layer or the insulating layer when the outer layers are pealed off, comprises the polyolefin composition as described above.

Insulating layers for medium or high voltage power cables generally have a thickness of at least 2 mm, typically at least 2.3 mm, and the thickness increases with increasing voltage the cable is designed for.

Preferably, the insulating layer has a thickness of at least 4 mm, more preferably at least 5 mm. This corresponds to a 10 kV and a 20 kV cable, respectively.

In addition to the semiconductive and insulating layers, further layers may be present in medium or high voltage cables, such as a metallic tape or wire shield, and, finally, an outermost jacketing layer.

In a further preferred embodiment, the invention relates to a low voltage cable comprising one or more conductors in a cable core followed by an insulating layer and an outer protective jacket wherein at least one of these layers, preferably the outer layer or the insulating layer when the outer layers are pealed off, comprises the polyolefin composition as described above.

Usually, the cable is produced by co-extrusion of the different layers onto the conducting core. Then, cross-linking is performed by moisture curing, wherein in the presence of the acidic silanol condensation catalyst the silane groups are hydrolysed under the influence of water or steam, resulting in the splitting off of alcohol and the formation of silanol groups, which are then cross-linked in a condensation reaction wherein water is split off.

Moisture curing may be performed in a sauna or water bath at temperatures of 70 to 100 °C.

In a preferred embodiment of the present invention the curing is performed at temperature of 5 to 50 °C, more preferably of 10 to 40 °C and a humidity below 85 %, more preferably below 75 %.

The invention relates furthermore to the use of the polyolefin composition in any of the above described embodiments for the production of an article, preferably a layer of a wire or cable, more preferably of a layer, still more preferably an insulating layer, of a medium or high voltage cable.

In a further preferred embodiment the invention relates furthermore to the use of the polyolefin composition in any of the above described embodiments for the production of a layer of low voltage cables, more preferably of a jacketing layer for outdoor low voltage cables and of an insulation layer for indoor low voltage cables.

In another preferred embodiment the invention relates furthermore to the use of the polyolefin composition in any of the above described embodiments for the production of a layer of a cable, preferably of a track resistant cable mounted in power lines.

The following examples serve to further illustrate the present invention.

### Examples

### Measurement Methods

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylenes and may be determined at different loadings such as 2.16 kg (MFR₂) or 21.6 kg (MFR₂₁). The MFR is determined at 230 °C for polypropylenes.

### b) Ice test

The ice test refers to an internal measurement method. The purpose of this measurement is to determine the cross-linking speed of silane group containing polyolefins by curing the polyolefin at 120°C in a Brabender mixer with rotors, a volume of 287 cm³ and a recorder for time, temperature and torque by adding catalyst and ice.

The weights and volumes of the components are calculated to have 254 cm³. The chamber temperature is set to 120°C and it is checked that the temperature is stable. The polymer resin is charged into the chamber in portions. When the resin is melted, the additives which are not part of the catalyst masterbatch are added. After dispersion of the additives in the melt, the catalyst masterbatch is charged. The melt is further mixed until the torque baseline is stable.

Then 20 g of crushed ice, made from deionised water and packed in a small polyethylene plastic bag, is added to the melt and the time, temperature and torque are recorded until the cure is completed or for a maximum time of 2 h.

Δ F [Nm] is calculated from maximum torque recorded subtracted by the minimum torque which represents the baseline when adding the ice.

The cross-linking speed [Nm/s] is calculated from Δ F divided by the time in seconds it takes from adding the ice to reaching the maximum torque.

### c) Tensile elongation at break after exposure in SEPAP oven

The tensile elongation and stress at break after exposure in SEPAP oven is measured according to ISO527 2/5 A.

### d) pH measurement

1 wt % of the substance was solved in de-ionized water. The samples were shaken for 4 hours. Then the sample conditioned for 20 hours at room temperature. ASTM D 1293, test method B, has been utilized.

### 2. Compositions

### a) Master batches

Master batches were produced comprising:
- a matrix resin: an ethylene butylacrylate copolymer with 17 wt.% butylacrylate, a density of 926 kg/m³ and a MFR₂ of 0.9 g/10 min;
- a acidic silanol condensation catalyst: dodecylbenzenesulfonic acid (DBSA)
- a silane containing compound: hexadecyltrimethoxysilane (HDTMS)
- an antioxidant: lonol^{®} LC distributed by Degussa (Cas No. 68610-51-5)
- an antiblocking agent: Hoechstwax E (Cas No. 73138-45-1)

The components were used in the masterbatches in the amounts as indicated in Table 1 (data given in wt.%). Compounding of the master batches at 180°C was performed using a Brabender kneader (small chamber, 47 cm³). The masterbatch was grinded in a cryo mill to a suitable size for the mixing with the silane-ethylene copolymer prior to tape extrusion. Dog bones were made from tape, 1 mm thick.

**Table 1:**

| | Masterbatch |
|---|---|
| Matrix | 85.5 |
| DBSA | 1.5 |
| HDTMS | 4.0 |
| Antioxidant | 8.0 |
| Antiblocking agent | 1.0 |

### b) Compositions

The masterbatch of Table 1 was compounded in an amount of 5 wt.% with 94.6 wt.% of a silane group containing polyethylene having a density of 923 kg/m³, a MFR₂ of 1 g/10 min and a silane copolymer content of 1.9 wt.% and 0.4 wt% of an UV stabilizer as listed in Table 2 in a Brabender kneader to yield the compositions for the insulating layer of a power cable (inventive Examples Ex1 to Ex5, comparative Examples CE1 to CE5). For a further comparative Example CE6 the master batch of Table 1 was compounded in an amount of 5 wt.% with 94.75 wt.% of the above silane group containing polyethylene and 0.25 wt% of an UV stabilizer as listed in Table 2 in a Brabender kneader. In Example Ex6 0.2 wt% of UV stabilizer as listed in Table 2 was compounded with the masterbatch in an amount of 5 wt.% and with 94.8 wt.% of the above silane group containing polyethylene.

**Table 2:**

| | UV stabilizer | pH |
|---|---|---|
| Example 1 (Ex1) | ADK stab LA-31 (Cas No.103597-45-1) | 6.1 |
| Example 2 (Ex2) | Uvinul^{®} 3028 (tin328) (Cas. No. 25973-55-1) | |
| Example 3 (Ex3) | Uvinul^{®} 3029 (Cas No.3147-75-9) | |
| Example 4 (Ex4) | Uvinul^{®} 3034 (Cas No. 70321-86-7) | |
| Example 5 (Ex5) | Tinuvin^{®} 327 (Cas No. 3864-99-1) | |
| Example 6 (Ex6) | ADK stab LA-81 (Cas 705257-84-7) | 5.7 |
| Comp. Example 1 (CE1) | Tinuvin^{®} 120 (Cas No. 4221-80-1) | 5.7 |
| Comp. Example 2 (CE2) | Tinuvin^{®} 326 (Cas No. 3896-11-55) | 5.9 |
| Comp. Example 3 (CE3) | Hostavin^{®} ARO 8 (Cas No. 1843-05-6) | 6.0 |
| Comp. Example 4 (CE4) | Sanduvor^{®} VSU (Cas No. 23949-66-8) | |
| Comp. Example 5 (CE5) | Tinuvin^{®} 622 (Cas No. 65447-77-0) | 6.3 |

| | | |
|---|---|---|
| Tinuvin^{®} 622, Tinuvin^{®} 327, Tinuvin^{®} 120 and Tinuvin^{®} 326 are distributed by Ciba, Uvinul^{®} 3028, Uvinul^{®} 3029 and Uvinul^{®} 3034 are distibuted by BASF, Hostavin^{®} ARO 8 and Sanduvor^{®} VSU are distributed by Clariant, ADK stab LA-31 and LA-81 are distributed by Adeka-Palmarole. | | |

To test the cross-linking behaviour, the cure of the compositions Ex1 to Ex6 and CE1 to CE5 is measured as torque increase in the ice test and reported ass Δ F which represents Fₘₐₓ - Fₛₜₐᵣₜ. Further the cross-linking speed is determined from ΔF.

The results of the ice test are given in Table 3 as regards Δ F and the cross-linking speed.

**Table 3:**

| | Ex1 | Ex2 | Ex3 | Ex4 | Ex5 | Ex6 | CE1 | CE2 | CE3 | CE4 | CE5 |
|---|---|---|---|---|---|---|---|---|---|---|---|
| Δ F [Nm] | 46.9 | 54.2 | 53.5 | 53.7 | 53.8 | 47.8 | 53.2 | 48.7 | 53.0 | 52.2 | < 10 |
| Cross-linking speed [Nm/s] | 0.20 | 0.20 | 0.18 | 0.19 | 0.21 | 0.13 | 0.27 | 0.20 | 0.29 | 0.28 | 0 |

It is shown in Table 3 that the inventive polyolefin compositions prove good cure properties of at least 46.9 Nm and a cross-linking speed of at least 0.13 Nm/s. In comparative Example CE6 which has a pH of 6.3 no cross-linking and almost no curing occurs.

Furthermore, to test the aging of the polymer compositions after exposure to UV light, dogbones from tape of the polymer compositions Ex1 and CE1 to CE5 were produced, exposed to UV light for 400 h, 500 h, 1000 h, 2000 h or 3000 h and afterwards tested for the breaking stress and the elongation at break. The results of the tests are given in Table 4 as regards the breaking stress and in Table 5 as regards the elongation at break after exposure to UV light for 400 h, 500 h, 1000 h, 2000 h or 3000 h.

**Table 4:**

| Breaking stress | Ex1 | CE1 | CE2 | CE3 | CE4 | CE5 |
|---|---|---|---|---|---|---|
| at 0 h (MPa) | 19.3 | 18.9 | 21.4 | 26.1 | 24.1 | 22:1 |
| at 400 h (MPa) | --- | --- | --- | 16.2 | 21.5 | 12.7 |
| at 500 h (MPa) | 18.1 | 9.9 | 10.5 | 14.6 | 14.0 | 12.1 |
| at 2000 h (MPa) | 14.2 | --- | --- | --- | --- | --- |
| at 3000 h (MPa) | 11.8 | --- | --- | --- | --- | --- |

**Table 5:**

| | | Ex1 | CE1 | CE2 | CE3 | CE4 | CE5 |
|---|---|---|---|---|---|---|---|
| 0 h | Elong. at break [%] | 275.7 | 320.7 | 325.1 | 311.8 | 302.0 | 604.7 |
| 400 h | Elong. at break [%] | --- | --- | 189.9 | 232.4 | 106.6 | --- |
| | Change in tensile strength [%] | --- | --- | -41.6 | -25.5 | -64.7 | --- |
| 500 h | Elong. at break [%] | 250.1 | 19.6 | 145.0 | 161.1 | 73.9 | 123.4 |
| | Change in tensile strength [%] | -9,3 | -93.9 | -55.4 | -48.3 | -75.5 | -79.6 |
| 1000 h | Elong. at break [%] | 244.2 | --- | --- | --- | --- | --- |
| | Change in tensile strength [%] | -11.4 | --- | --- | --- | --- | --- |
| 2000 h | Elong. at break [%] | 132.9 | --- | --- | --- | --- | --- |
| | Change in tensile strength [%] | -51.8 | --- | --- | --- | --- | --- |
| 3000 h | Elong. at break [%] | 53.6 | --- | --- | --- | --- | --- |
| | Change in tensile strength [%] | -80.6 | --- | --- | --- | --- | --- |

It can be seen from Table 5 that the tensile strength of the inventive polyolefin composition Ex1 is decreased after exposure to UV light for 1000 h only by -11.4 % whereas the tensile strength of the comparative polyolefin compositions CE1 to CE5 which comprise non inventive UV stabilizers is decreased after exposure to UV light for only 500 h at least by -48.3 %.

Therefore, from Table 3 and 5 it can be seen that the inventive polymer composition Ex1 shows both good cure and UV resistance properties.

## Claims

1. A polyolefin composition comprising
(A) a cross-linkable polyolefin with hydrolysable silane groups;
(B) an acidic silanol condensation catalyst, and
(C) at least one UV stabilizer that is acidic, i.e. pH equal or less than 6.2, measured at 20-25 °C and with 1 wt% suspension according to ASTM D 1293 B,
wherein component (C) comprises a UV stabilizer according to formula (I) 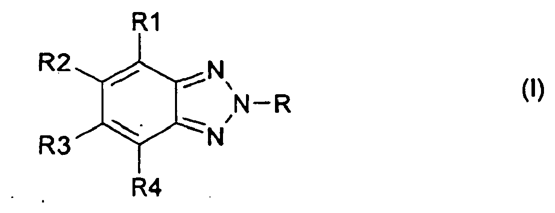 with R being a substituted or non-substituted hydrocarbon residue with at least 6 C-atoms;
and R1 to R4 being independently the same or different substituted or non-substituted hydrocarbon residues, hydrogen atoms or hetero atoms,
which is present in an amount of at least 0.30 wt% of the polymer composition
and/or according to formula (II) 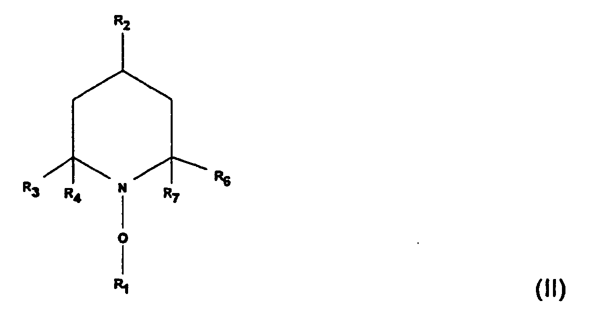 with R1 and R2 being any substituent,
and R3 to R6 being independently the same or different hydrocarbon,
which is present in an amount of at least 0.10 wt% of the polymer composition, wherein the acidic silanol condensation catalyst (B) comprises an organic sulfonic acid comprising 10 to 200 C-atoms, the sulfonic acid further comprising at least one aromatic group.

2. A polyolefin composition according to claim 1 wherein R of the at least one UV stabilizer (C) in formula (I) further comprises at least one aryl group which may be substituted or non-substituted.

3. A polyolefin composition according to claim 1 or 2 wherein in formula (I) R1, R2, R3, and R4 being independently hydrogen atoms or halogen atoms.

4. A polyolefin composition according to claim 1 wherein in formula (II) R3 to R6 being methyl.

5. A polyolefin composition according to claim 1 or 4 wherein in formula (II) R1 being hydrocarbon.

6. A polyolefin composition according to any of the previous claims wherein the cross-linkable polyolefin with hydrolysable silane groups (A) comprises a polyethylene with hydrolysable silane groups.

7. A polyolefin composition according to any of the preceding claims wherein in the cross-linkable polyolefin with hydrolysable silane groups (A) the silane groups are present in an amount of 0.001 to 15 wt% of component (A).

8. A polyolefin composition according to any of the preceding claims wherein the polyolefin composition further comprises a polyolefin composition with monomer units with polar groups.

9. A polyolefin composition according to claim 8 wherein in the polyolefin composition the monomer units with polar groups are present in an amount of 40 wt.% or less.

10. A polyolefin composition according to claim 8 or 9 wherein the cross-linkable polyolefin with hydrolysable silane groups (A) is a terpolymer also containing monomer units with polar groups.

11. A polyolefin composition according to any of claims 8 to 10 wherein the monomer units with polar groups comprises monomer units with acrylate and/or acetate units.

12. A polyolefin composition according to claim 1 wherein the acidic silanol condensation catalyst (B) comprises an organic sulfonic acid with the structural element:
Ar(SO₃H)ₓ (V)
with Ar being an aryl group which may be substituted or non-substituted and x being at least 1.

13. A polyolefin composition according to claim 12 wherein in formula (V) Ar is substituted with at least one C₁- to C₃₀-hydrocarbyl group.

14. A polyolefin composition according to any of the preceding claims wherein the acidic silanol condensation catalyst (B) is present in an amount of 0.0001 to 3 wt% of the polyolefin composition.

15. Article comprising a polyolefin composition according to any of claims 1 to 14.

16. Article according to claim 15 wherein the article is a pipe, wire or cable.

17. Use of a polyolefin composition according to any of claims 1 to 14 for the production of an article.

18. Use according to claim 17 wherein the article is a layer of a wire or cable.

## Patentansprüche

1. Polyolefinzusammensetzung, umfassend:
(A) ein vernetzbares Polyolefin mit hydrolysierbaren Silangruppen;
(B) einen sauren Silanolkondensationskatalysator und
(C) zumindest einen UV-Stabilisator, der sauer ist, d.h. pH kleiner oder gleich 6,2, gemessen bei 20 bis 25°C und bei einer Suspension mit 1 Gew.-% gemäß ASTM D 1293 B, wobei die Komponente (C) einen UV-Stabilisator gemäß der Formel (I): 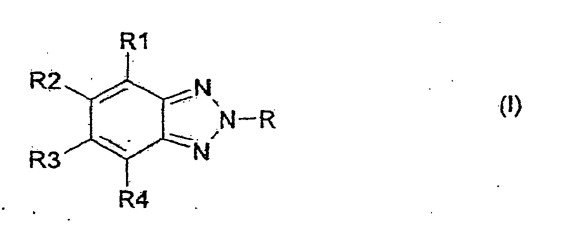 wobei R ein substituierter oder unsubstituierter Kohlenwasserstoffrest mit mindestens 6 C-Atomen ist; und
R1 bis R4 unabhängig voneinander die gleichen oder verschiedene substituierte oder unsubstituierte Kohlenwasserstoffreste, Wasserstoffatome oder Heteroatome sind,
der in einer Menge von mindestens 0,30 Gew.-% der Polymerzusammensetzung vorliegt,
und/oder gemäß der Formel (II) umfaßt: 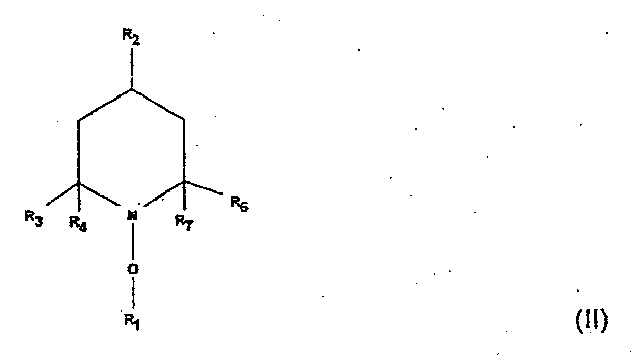 wobei R₁ und R₂ irgendein Substituent sind, und
R₃ bis R₆ unabhängig voneinander der gleiche oder ein unterschiedlicher Kohlenwasserstoffrest sind,
der in einer Menge von mindestens 0,10 Gew.-% der Polymerzusammensetzung vorliegt,
wobei der saure Silanolkondensationskatalysator (B) eine organische Sulfonsäure umfaßt, die 10 bis 200 C-Atome aufweist, wobei die Sulfonsäure ferner zumindest einen aromatischen Rest aufweist.

2. Polyolefinzusammensetzung nach Anspruch 1, wobei R des zumindest eine UV-Stabilisators (C) in der Formel (I) ferner zumindest eine Arylgruppe aufweist, die substituiert oder unsubstituiert sein kann.

3. Polyolefinzusammensetzung nach Anspruch 1 oder 2, wobei in der Formel (I) R1, R2, R3 und R4 unabhängig voneinander Wasserstoffatome oder Halogenatome sind.

4. Polyolefinzusammensetzung nach Anspruch 1, wobei in der Formel (II) R₃ bis R₆ Methyl sind.

5. Polyolefinzusammensetzung nach Anspruch 1 oder 4, wobei in der Formel (II) R₁ ein Kohlenwasserstoffrest ist.

6. Polyolefinzusammensetzung nach einem der vorstehenden Ansprüche, wobei das vernetzbare Polyolefin mit hydrolysierbaren Silangruppen (A) ein Polyethylen mit hydrolysierbaren Silangruppen umfaßt.

7. Polyolefinzusammensetzung nach einem der vorstehenden Ansprüche, wobei in dem vernetzbaren Polyolefin mit hydrolysierbaren Silangruppen (A) die Silangruppen in einer Menge von 0,001 bis 15 Gew.-% der Komponente (A) vorliegen.

8. Polyolefinzusammensetzung nach einem der vorstehenden Ansprüche, wobei die Polyolefinzusammensetzung ferner eine Polyolefinzusammensetzung mit Monomereinheiten mit polaren Gruppen umfaßt.

9. Polyolefinzusammensetzung nach Anspruch 8, wobei in der Polyolefinzusammensetzung die Monomereinheiten mit polaren Gruppen in einer Menge von 40 Gew.-% oder weniger vorliegen.

10. Polyolefinzusammensetzung nach Anspruch 8 oder 9, wobei das vernetzbare Polyolefin mit hydrolysierbaren Silangruppen (A) ein Terpolymer ist, das auch Monomereinheiten mit polaren Gruppen enthält.

11. Polyolefinzusammensetzung nach einem der Ansprüche 8 bis 10, wobei die Monomereinheiten mit polaren Gruppen Monomereinheiten mit Acrylat- und/oder Acetateinheiten umfassen.

12. Polyolefinzusammensetzung nach Anspruch 1, wobei der saure Silanolkondensationskatalysator (B) eine organische Sulfonsäure mit dem Strukturelement umfaßt:
Ar(SO₃H)ₓ (V)
wobei Ar eine Arylgruppe ist, die substituiert oder unsubstituiert sein kann, und x mindestens 1 beträgt.

13. Polyolefinzusammensetzung nach Anspruch 12, wobei in der Formel (V) Ar mit zumindest einem C₁-C₃₀-Kohlenwasserstoffrest substituiert ist.

14. Polyolefinzusammensetzung nach einem der vorstehenden Ansprüche, wobei der saure Silanolkondensationskatalysator (B) in einer Menge von 0,0001 bis 3 Gew.-% der Polyolefinzusammensetzung vorliegt.

15. Gegenstand, der eine Polyolefinzusammensetzung nach einem der Ansprüche 1 bis 14 umfaßt.

16. Gegenstand nach Anspruch 15, wobei der Gegenstand ein Rohr, ein Draht oder ein Kabel ist.

17. Verwendung einer Polyolefinzusammensetzung nach einem der Ansprüche 1 bis 14 für die Herstellung eines Gegenstandes.

18. Verwendung nach Anspruch 17, wobei der Gegenstand eine Schicht eines Drahtes oder Kabels ist.

## Revendications

1. Composition de polyoléfines comprenant
(A) une polyoléfine réticulable avec des groupes silanes hydrolysables ;
(B) un catalyseur de condensation au silanol acide, et
(C) au moins un stabilisant UV qui est acide, c'est-à-dire de pH égal ou inférieur à 6,2, mesuré à 20°C à 25°C et en suspension à 1 % en poids selon la norme ASTM D 1293 B,
où le composant (C) comprend un stabilisant UV selon la formule (I) 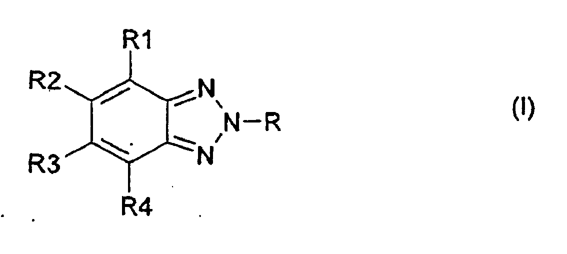 R étant un résidu hydrocarbure substitué ou non substitué avec au moins 6 atomes de carbone ;
et R1 à R4 étant indépendamment des résidus hydrocarbures substitués ou non substitués identiques ou différents, des atomes d'hydrogène ou des hétéroatomes,
qui est présent dans une quantité d'au moins 0,30 % en poids de la composition de polymères,
et/ou selon la formule (II) 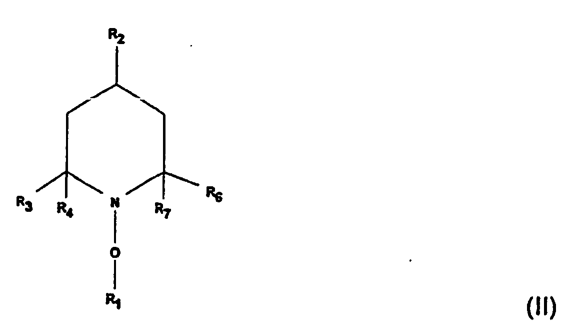 R1 et R2 étant un substituant quelconque,
R3 et R6 étant indépendamment des hydrocarbures identiques ou différents,
qui est présent dans une quantité d'au moins 0,10 % en poids de la composition de polymères,
où le catalyseur de condensation au silanol acide (B) comprend un acide sulfonique organique comprenant 10 à 200 atomes de carbone, l'acide sulfonique comprenant en outre au moins un groupe aromatique.

2. Composition de polyoléfines selon la revendication 1, dans laquelle R de l'au moins un stabilisant UV (C) dans la formule (I) comprend en outre au moins un groupe aryle qui peut être substitué ou non substitué.

3. Composition de polyoléfines selon la revendication 1 ou 2, dans laquelle dans la formule (I) R1, R2, R3, et R4 sont indépendamment des atomes d'hydrogène ou des atomes d'halogènes.

4. Composition de polyoléfines selon la revendication 1, dans laquelle dans la formule (II) R3 à R6 sont un méthyle.

5. Composition de polyoléfines selon la revendication 1 ou 4, dans laquelle dans la formule (II) R1 est un hydrocarbure.

6. Composition de polyoléfines selon l'une quelconque des revendications précédentes, dans laquelle la polyoléfine réticulable avec des groupes silanes hydrolysables (A) comprend un polyéthylène avec des groupes silanes hydrolysables.

7. Composition de polyoléfines selon l'une quelconque des revendications précédentes, dans laquelle dans la polyoléfine réticulable avec des groupes silanes hydrolysables (A) les groupes silanes sont présents dans une quantité de 0,001 % à 15 % en poids du composant (A).

8. Composition de polyoléfines selon l'une quelconque des revendications précédentes, laquelle composition de polyoléfines comprend en outre une composition de polyoléfines avec des unités de monomères avec des groupes polaires.

9. Composition de polyoléfines selon la revendication 8, dans laquelle dans la composition de polyoléfines les unités de monomères avec des groupes polaires sont présentes dans une quantité de 40 % en poids ou moins.

10. Composition de polyoléfines selon la revendication 8 ou 9, dans laquelle la polyoléfine réticulables avec des groupes silanes hydrolysables (A) est un terpolymère contenant également des unités de monomères avec des groupes polaires.

11. Composition de polyoléfines selon l'une quelconque des revendications 8 à 10, dans laquelle les unités de monomères avec des groupes polaires comprennent des unités de monomères avec des unités d'acrylate et/ou d'acétate.

12. Composition de polyoléfines selon la revendication 1, dans laquelle le catalyseur de condensation au silanol acide (B) comprend un acide sulfonique organique avec l'élément structural :
Ar(SO₃H)ₓ (V)
Ar étant un groupe aryle qui peut être substitué ou non substitué et x étant au moins égal à 1.

13. Composition de polyoléfines selon la revendication 12, dans laquelle dans la formule (V) Ar est substitué avec au moins un groupe hydrocarbyle en C₁ à C₃₀.

14. Composition de polyoléfines selon l'une quelconque des revendications précédentes, dans laquelle le catalyseur de condensation au silanol acide (B) est présent dans une quantité de 0,0001 % à 3 % en poids de la composition de polyoléfines.

15. Article comprenant une composition de polyoléfines selon l'une quelconque des revendications 1 à 14.

16. Article selon la revendication 15, lequel article est un tuyau, un fil ou un câble.

17. Utilisation d'une composition de polyoléfines selon l'une quelconque des revendications 1 à 14 pour la production d'un article.

18. Utilisation selon la revendication 17, où l'article est un revêtement d'un fil ou d'un câble.
